(19) Europäisches Patentamt

European Patent Office

Office européen des brevets

(11) Veröffentlichungsnummer: **0 271 719**
**B1**

(12) **EUROPÄISCHE PATENTSCHRIFT**

(45) Veröffentlichungstag der Patentschrift:
**18.07.90**

(21) Anmeldenummer: **87116751.6**

(22) Anmeldetag: **13.11.87**

(51) Int. Cl.⁵: **C05F 9/02, B65F 1/16**

(54) Müllbehälter zur Aufnahme von kompostierfähigen Abfällen.

(30) Priorität: **15.12.86 DE 3642761**

(43) Veröffentlichungstag der Anmeldung:
**22.06.88 Patentblatt 88/25**

(45) Bekanntmachung des Hinweises auf die Patenterteilung:
**18.07.90 Patentblatt 90/29**

(84) Benannte Vertragsstaaten:
**AT CH DE FR GB LI NL**

(56) Entgegenhaltungen:
**DE-A- 3 225 335**
**DE-C- 3 517 262**

(73) Patentinhaber: **Fritz Schäfer Gesellschaft mit beschränkter Haftung, Fritz-Schäfer-Strasse 20, D-5908 Neunkirchen(DE)**

(72) Erfinder: **Schäfer, Gerhard, Oberes Gerstenfeld 2, D-5908 Neunkirchen-Salchendorf(DE)**

(74) Vertreter: **Müller, Gerd et al, Patentanwälte HEMMERICH-MÜLLER-GROSSE-POLLMEIER-MEY Hammerstrasse 2, D-5900 Siegen 1(DE)**

## Beschreibung

Die Erfindung betrifft einen Müllbehälter zur Aufnahme von kompostierfähigen Abfällen, bei welchem das durch einen Deckel, insbesondere einen Klappdeckel, verschließbare Aufnahmegefäß in seinen Wandungen zumindest bereichsweise mit Luftdurchtrittsöffnungen versehen ist sowie einen Siebeinsatz als Abfallträger enthält.

Müllbehälter dieser Art stehen dort in Gebrauch, wo in größerem Umfang pflanzliche und/oder organische Abfallstoffe entstehen und sich daher in hervorragender Weise durch Kompostierung zu Naturdünger umwandeln lassen.

Da Hausmüll etwa zu einem Drittel aus Abfällen pflanzlicher und organischer Natur besteht, können durch deren Separierung und Kompostierung nicht nur die Mülldeponien erheblich entlastet werden, sondern der hierbei entstehende Naturdünger läßt sich problemlos und in hervorragender Weise als Naturdünger beim Garten- und Landschaftsbau verwerten.

Damit bei der Umwandlung des Hausmülls in Kompost Geruchsbelästigungen vermieden werden, ist es wichtig, daß die in den Müllbehältern eingelagerten Abfälle ständig gut durchlüftet, also mit Sauerstoff versorgt werden. Deshalb ist auch das Aufnahmegefäß der Müllbehälter in seinen Wandungen zumindest bereichsweise mit Luftdurchtrittsöffnungen versehen und darüber hinaus werden die Abfälle innerhalb des Aufnahmegefäßes zusätzlich noch auf und/oder in einem Siebeinsatz gelagert.

Naturgemäß haben pflanzliche und/oder organische Abfälle, wie Salat- und Gemüseabfälle, Kartoffelschalen, aber auch Laub, Unkraut oder auch sonstige Pflanzenreste einen relativ hohen Feuchtigkeitsgehalt. Während sich der größte Teil dieser Feuchtigkeit am Boden des Aufnahmegefäßes in einem Flüssigkeitssumpf ansammelt, verdampft ein gewisser Anteil dieser Feuchtigkeit aufgrund der im Müllbehälter entstehenden Fäulnistemperatur. Die aufsteigenden Dämpfe schlagen sich dann an der Unterseite des den Müllbehälter verschließenden Deckels nieder. Das dort gebildete Kondensat fließt dann zum Deckelrand hin ab und gelangt von dort aus auf den den Öffnungsrand des Aufnahmegefäßes umfassenden Versteifungskragen. Von diesem Versteifungskragen aus tropft das Kondensat entweder unmittelbar auf den Boden herab und/oder es gelangt auf die Außenflächen der Wandungen des Aufnahmegefäßes. Dort bilden sich dann in erheblichem Umfang Verkrustungen und Streifen, die den Müllbehälter schon nach kurzer Gebrauchszeit unansehnlich werden lassen.

Der Erfindung liegt die Aufgabe zugrunde, einen Müllbehälter der im Anspruch 1 angegebenen Gattung mit geringem technischen Aufwand so zu verbessern, daß die beim Kompostiervorgang verdampfende Feuchtigkeit nicht in unerwünschter Weise aus dem Müllbehälter austreten kann, sondern innerhalb desselben verbleibt bzw. nach der Kondensatbildung wieder in die Abfallstoffe zurückgeleitet wird.

Die Lösung dieser Aufgabe ist erreichbar durch die Kennzeichnungsmerkmale des Anspruchs 1, nämlich dadurch, daß der Deckel an seiner Unterseite im Abstand von seinem Begrenzungsrand mit einer abwärts gerichteten Rippe oder Leiste versehen ist, die entlang der inneren Begrenzungskante des Öffnungsrandes des Aufnahmegefäßes verläuft.

Die Rippe oder Leiste grenzt nicht nur den als Niederschlagsfläche für das Kondensat dienenden Bereich der Dekkelunterseite gegen den Begrenzungsrand hin ab, sondern sie bildet zugleich auch eine wirksame Tropfkante, von welcher das Kondensat sicher in das Aufnahmegefäß zurück gelangt.

Bewährt hat sich nach der Erfindung eine Ausgestaltung, die gemäß Anspruch 2 darin besteht, daß die Rippe oder Leiste, zumindest soweit sie sich längs des vorderen Deckelbegrenzungsrandes sowie der seitlichen Deckelbegrenzungsränder erstreckt, in der Schließlage des Deckels mit ihrer freien Kante im Abstand oberhalb des Öffnungsrandes des Aufnahmegefäßes liegt. Beschädigungen an der Rippe oder Leiste durch zwischen ihr und dem Öffnungsrand des Aufnahmegefäßes eingeklemmte Abfallreste lassen sich hierdurch nämlich auf einfache Art und Weise vermeiden.

Insbesondere wenn die Deckelschwenkachse in einem größeren Abstand von dem hinteren Öffnungsrand des Behälters angeordnet ist, empfiehlt es sich, daß die Rippe oder Leiste, zumindest soweit sie sich längs des hinteren Deckelbegrenzungsrandes erstreckt, in der Schließlage des Deckels mit ihrer freien Kante im Abstand unterhalb des Öffnungsrandes des Aufnahmegefäßes liegt. Dadurch wird beim Anheben des Deckels sichergestellt, daß das zum hinteren Deckelbegrenzungsrand fließende Kondensat in den Behälter tropft.

Gemäß Anspruch 4 kann die freie Kante des sich längs des hinteren Deckelbegrenzungsrandes erstreckenden Teils der Rippe oder Leiste deckeleinwärts abgewinkelt sein, wodurch eine Kondensat-Auffangtasche gebildet wird.

Im gleichen Zusammenhang hat es sich darüber hinaus als empfehlenswert erwiesen, wenn nach Anspruch 5 der Abstand der Rippe oder Leiste von der inneren Begrenzungskante am Öffnungsrand des Aufnahmegefäßes einem Mehrfachen der Wanddicke entspricht, so daß zwischen der Rippe oder Leiste und dem Öffnungsrand des Aufnahmegefäßes rundum ein Spalt freigehalten wird.

Die Rippe oder Leiste an der Unterseite des Deckels kann so angeordnet und ausgebildet sein, daß sie äquidistant zur Kontur des Öffnungsrandes am Aufnahmegefäß verläuft. Es wäre allerdings auch denkbar, daß bei etwa rechteckig oder quadratisch begrenztem Verlauf des Öffnungsrandes am Aufnahmegefäß die Rippe oder Leiste an der Unterseite des Deckels kreisringförmige Gestalt hat und somit in der Schließlage des Deckels mit verschiedenen Umfangsbereichen auch unterschiedliche Abstände von der inneren Begrenzungskante am Öffnungsrand des Aufnahmegefäßes einnimmt.

Die Wirkungsweise der Rippe oder Leiste als Tropfkante läßt sich erfindungsgemäß in vorteilhafter Weise dadurch verbessern, daß nach Anspruch 6 die innere Begrenzungsfläche der Rippe oder Leiste wenigstens im Übergangsbereich zur Unterseite des Deckels einen relativ großen Krümmungsradius aufweist. Die äußere Begrenzungsfläche der Rippe oder Leiste kann hingegen relativ scharfkantig, also mit einem geringen Radius in die Unterseite des Deckels übergehen.

Für einen Müllbehälter der gattungsgemäßen Art hat es sich nach der Erfindung weiterhin als wichtig erwiesen, daß gemäß Anspruch 7 der Siebeinsatz aus einem Klappboden besteht, welcher im Inneren des Aufnahmegefäßes mit Abstand über dessen Boden angelenkt ist. Wird der Müllbehälter zum Zwecke des Entleerens gekippt, dann kann sich der Klappboden ungehindert um seine Gelenke bewegen und dadurch ohne weiteres den von ihm üblicherweise abgedeckten Freiraum oberhalb des Bodens freilegen bzw. zugänglich machen.

Es hat sich als zweckmäßig erwiesen, wenn nach Anspruch 8 der Klappboden eine im wesentlichen ebene Tragfläche sowie daran anschließend abgebogene, vorzugsweise nach abwärts gerichtete Randflansche aufweist.

Empfehlenswert kann es nach Anspruch 9 aber auch sein, daß die Anlenkachse des Klappbodens entlang der gleichen Wand des Aufnahmegefäßes verläuft, an welcher auch die Anlenkachse für den Klappdeckel vorgesehen ist.

Schließlich sieht die Erfindung gemäß Anspruch 10 auch noch vor, daß der Klappboden wenigstens in der Nähe seines von der Klappachse entfernten Randes an der Unterseite mit Stützfüßen versehen ist, die um zur Klappachse parallele Gelenke verschwenkbar aufgehängt sind.

Der erfindungsgemäße Müllbehälter kann in seinem Grundaufbau einem Standard-Müllbehälter entsprechen, der bspw. ein Fassungsvermögen von 0,12 m³ bzw. 0,24 m³ aufweist und im Bodenbereich mit zwei Laufrädern versehen ist, deren Lagerachse parallel zu derjenigen Wand des Aufnahmegefäßes verläuft, an welcher auch der Klappdeckel angelenkt ist. Das Aufnahmegefäß eines solchen Standard-Müllbehälters braucht in seinen Wandungen lediglich zusätzlich mit den Luftdurchtrittsöffnungen versehen zu werden, und in seinem Inneren die Lager für die Aufhängung des Klappbodens zu erhalten. Ein solcher Standard-Müllbehälter kann dabei aber grundsätzlich bereits mit dem Deckel versehen sein, welcher im Abstand von seinem Begrenzungsrand mit der abwärts gerichteten Rippe oder Leiste versehen ist, die entlang der inneren Begrenzungskante des Öffnungsrandes des Aufnahmegefäßes verläuft.

Selbstverständlich liegt es auch im Rahmen der Erfindung, den Deckel an seiner Unterseite ggfs. mit mehreren Rippen oder Leisten zu versehen, von denen dann jede als Tropfkante für sich an der Deckelunterseite niederschlagendes Kondensat wirksam werden kann.

In der Zeichnung ist der Gegenstand der Erfindung als Ausführungsbeispiel dargestellt. Es zeigen

Figur 1 einen Vertikalschnitt durch einen Müllbehälter und

Figur 2 den in Fig. 1 mit II gekennzeichneten Ausschnitt des Müllbehälters in größerem Maßstab.

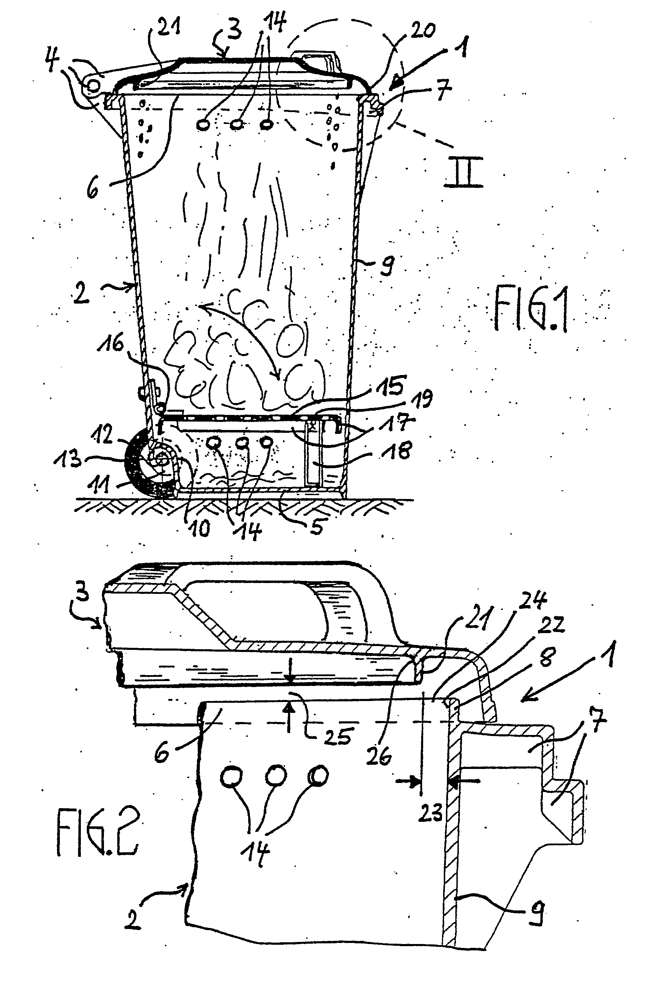

In Fig. 1 der Zeichnung ist ein Müllbehälter 1 dargestellt, der in seiner grundsätzlichen Ausführungsform einem sogenannten Standard-Müllbehälter entspricht. Er besteht aus einem Aufnahmegefäß 2 und einem Klappdeckel 3, der durch Scharniere 4 mit dem Aufnahmegefäß 2 verbunden ist. Aufnahmegefäß 2 und Klappdeckel 3 bestehen vorzugsweise aus Kunststoff-Formteilen. Sie können jedoch gegebenenfalls auch aus anderen Werkstoffen gefertigt werden.

Das unten durch einen Boden 5 abgeschlossene Aufnahmegefäß 2 hat üblicherweise einen im wesentlichen rechteckig oder quadratisch begrenzten Querschnitt, und seine aufwärts gerichtete Öffnung 6 wird außen von einem kragenartig profilierten Verstärkungsrand 7 begrenzt, welcher nach oben von einem Öffnungsrand 8 überragt ist, der in Verlängerung der Gefäßwandungen 9 liegt. Im Anschluß an den Boden 5 ist in die der Scharnierachse 4 für den Klappdeckel 3 benachbarte Gefäßwandung 9 eine Einbuchtung 10 eingeformt, in deren Bereich Lageraugen 11 ausgebildet sind, in welchen eine Achse 12 gehalten ist, auf deren beiden Enden je ein Laufrad 13 drehbar gehalten ist.

Mittels der beiden Laufräder 13 kann der Müllbehälter 1 problemlos verfahren werden, wobei in üblicher Weise als Haltegriff für die Manipulation des Müllbehälters 1 die Scharnierachse 4 für den Deckel 3 benutzt werden kann.

Das Aufnahmegefäß 2 ist in verschiedenen Bereichen seiner Wandungen 9, und zwar in jedem Falle mindestens mit einem gewissen Abstand oberhalb des Bodens 5 sowie unterhalb der Gefäßöffnung 6 mit einer größeren Anzahl von Luftdurchtrittsöffnungen 14 versehen, von denen in Fig. 3 oben und unten jeweils nur drei dargestellt sind. Innerhalb des Aufnahmegefäßes 2 und zwar mit Abstand oberhalb seines Bodens 5 ist als Abfallträger ein Siebeinsatz vorgesehen, der aus einem Klappboden 15 besteht und an der mit der Einbuchtung 10 versehenen Gefäßwandung 9 um Scharniere 16 beweglich angelenkt ist, deren Scharnierachse sich parallel zur Scharnierachse 4 des Deckels 3 erstreckt. Der Klappboden 15 hat dabei eine im wesentlichen ebene Tragfläche sowie daran anschließend nach unten abgebogene Randflansche 17, wie das deutlich aus Fig. 1 hervorgeht.

Wenigstens in der Nähe seines von den Scharnieren 16 entfernten Randes ist der Klappboden 15 an seiner Unterseite mit Stützfüßen 18 versehen, die um zu den Scharnieren 16 parallele Gelenke 19 verschwenkbar aufgehängt sind. In der Gebrauchslage des Klappbodens 15 gemäß Fig. 1 sind die Stützfüße 18 im wesentlichen quer zum Klappboden 15 nach abwärts gerichtet und ruhen auf dem Boden 5 des Aufnahmegefäßes 2. Wird der Klappboden 15 hingegen um die Scharniere 16 vom Boden 5 weg in Pfeilrichtung gegen die Gefäßwandung 9 verlagert, dann bewegen sich auch die Stützfüße 18 um ihre Gelenke 19 relativ zum Klappboden 15 und legen sich gegen dessen Unterseite platzsparend an.

An die Unterseite des Klappdeckels 3 ist im Abstand von seinem Umfangs- bzw. Begrenzungsrand 20 eine nach abwärts gerichtete Rippe oder Leiste 21 angeformt, und zwar derart, daß sie in der Schließlage des Klappdeckels 3 entlang der inneren Begrenzungskante 22 am Öffnungsrand 8 mit einem Abstand 23 verläuft. Dieser Abstand 23 ist dabei vorzugsweise so bemessen, daß er einem Mehrfachen der Wanddicke der Rippe oder Leiste 21 entspricht und ein entsprechender Spalt 24 zwischen dem Öffnungsrand 8 sowie der Rippe oder Leiste 21 freibleibt.

Die Rippe oder Leiste 21 ist ferner so gestaltet, daß sie in der Schließlage des Klappdeckels 3 mit ihrer freien Kante in einem Abstand 25 oberhalb des Öffnungsrandes 8 des Aufnahmegefäßes 2 zu liegen kommt und auch in dieser Richtung ein entsprechend breiter Spalt zwischen dem Öffnungsrand 8 sowie der Rippe oder Leiste 21 freibleibt.

Insbesondere wenn die Deckelschwenkachse in einem größeren Abstand von dem hinteren Öffnungsrand des Behälters angeordnet ist, kann es sich empfehlen, die Rippe oder Leiste 21, soweit sie sich längs des hinteren Deckelbegrenzungsrandes erstreckt, so weit nach unten zu verlängern, daß sie mit ihrer freien Kante in den Behälter eintaucht (nicht dargestellt). Dadurch wird beim Anheben des Deckels gewährleistet, daß das zum hinteren Deckelbegrenzungsrand fließende Kondensat in den Behälter tropft.

Es ist auch möglich, diese nach unten verlängerte freie Kante deckeleinwärts abzuwinkeln, so daß eine Aufnahmetasche für das Kondensat gebildet wird. Diese Tasche ist bei einem entsprechenden Anschluß an die sich längs der seitlichen Deckelbegrenzungsränder erstreckenden Teile der Rippe oder Leiste 21 seitlich verschlossen. Beim Anheben des Deckels sammelt sich dann das Kondensat in der Tasche, die sich dann in Schließlage des Deckels selbsttätig in das Gefäß entleert.

Als zweckmäßig hat es sich ferner erwiesen, wenn die innere Begrenzungsfläche der Rippe oder Leiste 21 wenigstens im Übergangsbereich zur Unterseite des Klappdeckels 3 einen relativ großen Krümmungsradius 26 aufweist, wie er deutlich in Fig. 2 der Zeichnung erkennbar ist. Die äußere Begrenzungsfläche der Rippe oder Leiste 21 kann hingegen in ihrem Übergangsbereich zur Unterseite des Deckels relativ scharfkantig bzw. mit nur einem geringen Übergangsradius ausgeführt sein.

Die Rippe oder Leiste 21 grenzt an der Unterseite des Klappdeckels 3 einen Flächenbereich ein, welcher nur geringfügig kleiner bemessen ist als der freie Querschnitt der Gefäßöffnung 6. Sie bildet dabei eine Tropfkante bzw. -nase, entlang welcher Kondenswasser, welches sich an der Unterseite des Klappdeckels 3 niedergeschlagen hat, sicher in das Aufnahmegefäß 2 zurückgeführt werden kann. Durch die Rippe oder Leiste 21 wird daher verhindert, daß Kondenswasser bis zum äußeren Begrenzungsrand 20 des Klappdeckels 3 gelangen und von dort aus auf den Versteifungsrand 7 und die Außenflächen des Aufnahmegefäßes 2 übertreten kann.

Selbstverständlich ist es auch möglich, an der Unterseite des Klappdeckels 3 mehrere Rippen oder Leisten 21 im Abstand zueinander so auszuformen, daß eine entsprechend größere Anzahl von Tropfnasen gebildet wird, die zur Gefäßöffnung 6 bzw. zum Öffnungsrand 8 des Aufnahmegefäßes 2 hin gerichtet sind. Gegebenenfalls kann es sich auch empfehlen, eine oder mehrere der Rippen oder Leisten 21 so lang zu bemessen, daß sie in der Schließlage des Klappdeckels 3 mit ihrer freien Kante bis in die Gefäßöffnung 6 herabreichen.

## Patentansprüche

1. Müllbehälter zur Aufnahme von kompostierfähigen Abfällen, bei welchem das durch einen Deckel, insbesondere einen Klappdeckel, verschließbare Aufnahmegefäß in seinen Wandungen zumindest bereichsweise mit Luftdurchtrittsöffnungen versehen ist sowie einen Siebeinsatz als Abfallträger enthält, dadurch gekennzeichnet, daß der Deckel (3) an seiner Unterseite im Abstand von seinem Begrenzungsrand (20) mit einer abwärts gerichteten Rippe oder Leiste (21) versehen ist, die entlang der inneren Begrenzungskante (22) des Öffnungsrandes (8) des Aufnahmegefäßes (2) verläuft.

2. Müllbehälter nach Anspruch 1, dadurch gekennzeichnet, daß die Rippe oder Leiste (21), zumindest soweit sie sich längs des vorderen Deckelbegrenzungsrandes sowie der seitlichen Deckelbegrenzungsränder erstreckt, in der Schließlage des Deckels (3) mit ihrer freien Kante im Abstand (25) oberhalb des Öffnungsrandes (8) des Aufnahmegefäßes (2) liegt.

3. Müllbehälter nach Anspruch 1 oder 2, dadurch gekennzeichnet, daß die Rippe oder Leiste (21), soweit sie sich längs des hinteren Deckelbegrenzungsrandes erstreckt, in der Schließlage des Deckels (3) mit ihrer freien Kante im Abstand unterhalb des Öffnungsrandes (8) des Aufnahmegefäßes (2) liegt.

4. Müllbehälter nach einem der Ansprüche 1 bis 3, dadurch gekennzeichnet, daß die freie Kante des sich längs des hinteren Deckelbegrenzungsrandes erstreckenden Teils der Rippe oder Leiste (21) deckeleinwärts abgewinkelt ist.

5. Müllbehälter nach einem der Ansprüche 1 bis 4, dadurch gekennzeichnet, daß der Abstand (23) der Rippe oder Leiste (21) von der inneren Begrenzungskante (22) am Öffnungsrand (8) des Aufnahmegefäßes (2) einem Mehrfachen ihrer Wanddicke entspricht.

6. Müllbehälter nach einem der Ansprüche 1 bis 5, dadurch gekennzeichnet, daß die innere Begrenzungsfläche der Rippe oder Leiste (21) wenigstens im Übergangsbereich zur Unterseite des Deckels (3) einen relativ großen Krümmungsradius (26) aufweist.

7. Müllbehälter nach einem der Ansprüche 1 bis 6, dadurch gekennzeichnet, daß der Siebeinsatz aus einem Klappboden (15) besteht, welcher im Inneren des Aufnahmegefäßes (2) mit Abstand über dessen Boden (5) angelenkt ist (16).

8. Müllbehälter nach dem Anspruch 7, dadurch gekennzeichnet,

daß der Klappboden (15) eine im wesentlichen ebene Tragfläche sowie daran anschließend abgebogene, vorzugsweise nach abwärts gerichtete Randflansche (17) aufweist.

9. Müllbehälter nach dem Anspruch 7,
dadurch gekennzeichnet,
daß die Anlenkachse (16) des Klappbodens (15) entlang der gleichen Wand (9) des Aufnahmegefäßes (2) verläuft, an der auch die Anlenkachse (4) für den Klappdeckel (3) vorgesehen ist.

10. Müllbehälter nach einem der Ansprüche 1 bis 9,
dadurch gekennzeichnet,
daß der Klappboden (15) wenigstens in der Nähe seines von der Klappachse (16) entfernten Randes an der Unterseite mit Stützfüßen (18) versehen ist, die um zur Klappachse (16) parallele Gelenke (19) verschwenkbar aufgehängt sind.

**Revendications**

1. Récipient pour déchets destiné à des déchets compostables dans lequel le réceptacle obturable par un couvercle, notamment un couvercle basculable, présente, dans ses parois, au moins dans certaines zones, des ouvertures de passage d'air et est équipé d'un tamis intérieur servant de support de déchets, caractérisé en ce que le couvercle (3) est muni, à sa face inférieure, à distance de son bord extérieur (20), d'une nervure ou moulure (21) orientée vers le bas, qui s'étend le long de l'arête interne (22) du bord (8) de l'ouverture du réceptacle (2).

2. Récipient pour déchets selon la revendication 1, caractérisé en ce que l'arête libre de la nervure ou moulure (21) est située, en position de fermeture du couvercle (3), à distance (25) au-delà du bord (8) de l'ouverture du réceptacle (2), au moins dans la mesure où ladite nervure ou moulure (21) s'étend le long du bord extérieur avant ainsi que des bords extérieurs latéraux du couvercle.

3. Récipient pour déchets selon la revendication 1 ou 2, caractérisé en ce que l'arête libre de la nervure ou moulure (21) est située, en position de fermeture du couvercle (3), à distance en deçà du bord (8) de l'ouverture du réceptacle (2), dans la mesure où ladite nervure ou moulure s'étend le long du bord extérieur arrière du couvercle.

4. Récipient pour déchets selon l'une quelconque des revendications 1 à 3 caractérisé en ce que l'arête libre de la partie de nervure ou moulure (21) qui s'étend le long du bord extérieur arrière du couvercle est pliée vers l'intérieur du couvercle.

5. Récipient pour déchets selon l'une quelconque des revendications 1 à 4, caractérisé en ce que la distance (23) de la nervure ou moulure (21) par rapport à l'arête interne (22) du bord de l'ouverture (8) du réceptacle (2) correspond à un multiple de son épaisseur.

6. Récipient pour déchets selon l'une quelconque des revendications 1 à 5, caractérisé en ce que la surface limite interne de la nervure ou moulure (21) présente un rayon de courbure (26) relativement grand au moins dans la zone de transition vers la face inférieure du couvercle (3).

7. Récipient pour déchets selon l'une quelconque des revendications 1 à 6 caractérisé en ce que le tamis intérieur consiste en un fond basculable (15) qui est articulé (16) à l'intérieur du réceptacle (2), à distance du fond (5) de celui-ci.

8. Récipient pour déchets selon la revendication 7, caractérisé en ce que le fond basculable (15) comporte une surface de support essentiellement plane ainsi que des brides latérales (17) s'y raccordant et repliées, de préférence orientées vers le bas.

9. Récipient pour déchets selon la revendication 7 caractérisé en ce que l'axe de basculement (16) du fond basculable (15) s'étend le long de la même paroi (9) du réceptacle (2) que celle à laquelle est aussi prévue l'axe de basculement (4) du couvercle basculable (3).

10. Récipient pour déchets selon l'une quelconque des revendications 1 à 9 caractérisé en ce que le fond basculable (15) est équipé de pieds d'appui (18) sur la face inférieure, à proximité du bord éloigné de l'axe de basculement (16), lesdits pieds d'appui étant agencés de manière basculable autour d'articulations (19) parallèles à l'axe de basculement (16).

**Claims**

1. Refuse container for receiving waste materials which are capable of being composted, in which container the receiving vessel able to be closed by a lid, more especially a hinged lid, is provided with air admission openings in its walls, at least at certain positions, and also contains a screen or grid insert as refuse support, characterised in that the lid (3) is provided, on its underside and spaced from its rim (20), with a downwardly projecting rib or strip (21) which extends along the inner limiting edge (22) of the rim (8) of the opening of the receiving vessel (2).

2. Refuse container according to claim 1, characterised in that the rib or strip (21) at least in so far as it is extended along the front limiting edge and also the lateral limiting edges of the lid, rests with its free edge at a distance (25) above the opening rim (8) of the receiving container (2) when the lid (3) is in the closed position.

3. Refuse container according to claim 1 or 2, characterised in that the rib or strip (21), where it is extended along the rear boundary wall of the lid, rests with its free edge at a distance below the rim (8) of the opening of the receiving container (2).

4. Refuse container according to one of claims 1 to 3, characterised in that the free edge of that part of the rib or strip (21) which extends longitudinally of the rear limiting wall of the lid is bent over inwardly of the lid.

5. Refuse container according to one of the claims 1 to 4, characterised in that the spacing (23) of the rib or strip (21) from the inner limiting edge (22) on the rim (8) of the opening in the receiving container (2) amounts to a multiple of its wall thickness.

6. Refuse container according to one of the claims 1 to 5, characterised in that the inner boundary surface of the rib or strip (21) has a relatively large radius of curvature (26), at least in the transition zone to the underside of the lid (3).

7. Refuse container according to one of the claims 1 to 6, characterised in that the screening insert consists of a hinged plate (15), which is hinged at (16) inside the receiving vessel (2) at a distance above its base (5).

8. Refuse container according to claim 7, characterised in that the hinged base (15) comprises a substantially flat support surface and also rim flanges (17) which are then bent over thereon and advantageously directed downwardly.

9. Refuse container according to claim 7, characterised in that the pivot axis (16) of the hinged base (15) extends along the same wall (9) of the receiving container (2), as that on which is also provided the pivot shaft (4) for the hinged lid (3).

10. Refuse container according to one of the claims 1 to 9, characterised in that the hinged lid (15), at least in the vicinity of its rim further from the hinge axis (16), is provided on the underside with supporting feet (18), which are suspended for being able to be swivelled about pivots (19) parallel to the hinge axis (16).

FIG.1

FIG.2